# EUROPÄISCHE PATENTANMELDUNG

(11) **EP 4 686 547 A1**
(43) Veröffentlichungstag der Anmeldung: **04.02.2026**
(21) Anmeldenummer: 25163199.0
(22) Anmeldetag: 12.03.2025
(51) Int. Cl.: B29C 49/02

(54) **BEHÄLTERBEHANDLUNGSANLAGE UMFASSEND EINE HERSTELLUNGSMASCHINE FÜR VORFORMLINGE, EINE BLASFORMMASCHINE UND WENIGSTENS EINE WÄRMERÜCKGEWINNUNGSEINRICHTUNG**

(30) Priorität: 02.08.2024 DE 102024122107
(71) Anmelder: Krones AG, 93073 Neutraubling (DE)
(72) Erfinder: Ottmann, Norbert, 93073 Neutraubling (DE)
(74) Vertreter: Grünecker Patent- und Rechtsanwälte PartG mbB

(57) **Zusammenfassung**

Behälterbehandlungsanlage umfassend eine Herstellungsmaschine für Vorformlinge, eine Blasformmaschine und wenigstens eine Wärmerückgewinnungseinrichtung, wobei einer ersten Wärmerückgewinnungseinrichtung ein erstes Prozessmedium von der Herstellungsmaschine und/oder der Blasformmaschine zugeführt werden kann, wobei mittels der ersten Wärmerückgewinnungseinrichtung Wärme zwischen dem ersten Prozessmedium und einem zweiten Prozessmedium der Behälterbehandlungsanlage ausgetauscht werden kann.

## Beschreibung

Die vorliegende Erfindung betrifft eine Behälterbehandlungsanlage umfassend eine Herstellungsmaschine für Vorformlinge, eine Blasformmaschine und wenigstens eine Wärmerückgewinnungsgewinnungseinrichtung entsprechend unabhängigem Anspruch 1 sowie ein Verfahren zum Herstellen von Behältern gemäß unabhängigem Anspruch 15.

### Stand der Technik

Behälterbehandlungsmaschinen mit einer Wärmerückgewinnungseinrichtung sind aus dem Stand der Technik hinreichend bekannt.

In Behälterbehandlungsmaschinen finden typischerweise verschiedene Behälterbehandlungsschritte unter Verwendung verschiedener Prozessmedien statt. Bei einer Vielzahl von Behandlungsschritten wird Energie frei. Um den Energiebedarf einer Behälterbehandlungsmaschine zu reduzieren, ist es wünschenswert die freiwerdende Energie an andere Stelle wiederzuverwenden.

Bei der Herstellung von Vorformlingen aus Kunststoff in einer Herstellungsmaschine wird der Kunststoff unter Energiezufuhr zunächst aufgeschmolzen, bevor dieser zu Vorformlingen ausgeformt werden kann. Ferner müssen Vorformlinge bevor dieses mittels einer Blasformmaschine zu Behältern ausgeformt werden können, auf eine Zieltemperatur erwärmt werden. Bei der Pasteurisierung von Behältern werden diese mit heißem Wasser beaufschlagt, um die Behälter auf eine bestimmte Zieltemperatur zu erwärmen und mögliche Keime abzutöten. Eine Beaufschlagung mit heißem Wasser oder einer heißen Reinigungsflüssigkeit findet auch bei Behälterreinigungsanlagen zur Reinigung der Behälter statt.

Während es insbesondere bei Behälterreinigungsanlagen und Pasteuren bekannt ist, eine Wärmrückgewinnung zur Wiederverwendung der bei der Reinigung oder Sterilisierung freiwerdenden Wärmeenergie vorzusehen, sind Wärmerückgewinnungsvorrichtungen bei Behälterherstellungsmaschinen, welche eine Herstellungsmaschine und eine Blasformmaschine umfassen und welche von beiden Maschinen gespeist werden können, aus dem Stand der Technik nicht bekannt.

### Aufgabe

Ausgehend vom bekannten Stand der Technik liegt die Aufgabe der vorliegenden Erfindung darin, eine Behälterbehandlungsanlage und ein Verfahren zum Herstellen von Behältern anzugeben, mittels welchem Behälter auf besonders energieeffiziente Weise hergestellt werden können.

### Lösung

Diese Aufgabe wird durch die Behälterbehandlungsanlage umfassend eine Herstellungsmaschine für Vorformlinge, eine Blasformmaschine und wenigstens eine Wärmerückgewinnungseinrichtung gemäß unabhängigem Anspruch 1 und das Verfahren zur Herstellung von Behältern gemäß unabhängigem Anspruch 15 gelöst. Bevorzugte Ausführungsformen der Erfindung sind in den abhängigen Ansprüchen erfasst.

Die erfindungsgemäße Behälterbehandlungsanlage umfasst eine Herstellungsmaschine für Vorformlinge, eine Blasformmaschine und wenigstens eine Wärmerückgewinnungseinrichtung, wobei einer ersten Wärmerückgewinnungseinrichtung ein erstes Prozessmedium von der Herstellungsmaschine und/oder der Blasformmaschine zugeführt werden kann und mittels der ersten Wärmerückgewinnungseinrichtung Wärme zwischen dem ersten Prozessmedium und einem zweiten Prozessmedium der Behälterbehandlungsanlage ausgetauscht werden kann.

Unter einer Herstellungsmaschine für Vorformlinge kann jede Vorrichtung verstanden werden, welche geeignet ist Vorformlinge aus einem thermoplastischen Material herzustellen. Bei der Herstellungsmaschine kann es sich beispielsweise um eine Spritzgussmaschine handeln. Alternativ kann es sich bei der Herstellungsmaschine beispielsweise auch um eine Formpressmaschine handeln.

Bei der Wärmerückgewinnungseinrichtung kann es sich um jede Einrichtung handeln, welche geeignete ist Wärme zwischen wenigstens zwei Prozessmedien auszutauschen. Bei der Wärmerückgewinnungseinrichtung kann es sich beispielsweise um eine rekuperative Wärmerückgewinnungseinrichtung, eine regenerative Wärmerückgewinnungseinrichtung, eine Wärmepumpe oder jede andere zum Wärmeaustausch zwischen wenigstens zwei Prozessmedien geeignete Wärmerückgewinnungseinrichtung handeln. Unter einer rekuperativen Wärmerückgewinnungseinrichtung kann eine Wärmerückgewinnungseinrichtung verstanden werden, bei welcher Wärme direkt zwischen zwei Prozessmedien ausgetauscht werden kann. Unter regenerativer Wärmerückgewinnung kann wiederum ein zusätzliches Austauschmedium vorgesehen sein, mittels welchem Wärme indirekt zwischen zwei Prozessmedien ausgetauscht werden kann.

Bei dem ersten Prozessmedium der Herstellungsmaschine und/oder der Blasformmaschine kann es sich um ein Prozessmedium, wie beispielsweise ein Gas handeln, welches nach der Durchführung eines Prozesseschrittes der Herstellungsmaschine und/oder der Blasformmaschine anfällt. Bei dem Prozessschritt der Herstellungsmaschine kann es sich beispielsweise um ein Erwärmen eines Herstellungsmaterial für Vorformlinge in der Herstellungsmaschine oder ein Abkühlen der mittels der Herstellungsmaschine hergestellten Vorformlinge handeln. Bei dem Prozessmedium der Herstellungsmaschine kann es sich beispielsweise um eine Abluft der Herstellungsmaschine handeln, welche zur Kühlung der mittels der Herstellungsmaschine hergestellten Vorformlinge verwendet wird. Bei dem Prozessschritt der Blasformmaschine kann es sich beispielsweise um einen Blasvorgang der Blasformmaschine handeln. Bei dem Prozessmedium der Blasformmaschine kann es sich in diesem Fall um ein Blasgas der Blasformmaschine handeln, welches zum Ausblasen der Vorformlinge zu Behältern verwendet wurde.

Bei den Behältern kann es sich um in der getränkeverarbeitenden Industrie zum Einsatz kommende Flaschen handeln. Es kann sich alternativ jedoch auch um jede andere Art von Behälter, wie beispielsweise eine Dose oder eine Spritze, welche zum Aufnehmen eines flüssigen und/oder pastösen Mediums geeignet ist, handeln. Bei dem Behälter kann es sich auch um einen in der Lebensmittelindustrie, der medizinischen Industrie oder der Kosmetikindustrie verwendeten Behälter handeln.

Mittels der erfindungsgemäßen Behälterbehandlungsanlage kann somit eine in einem Prozessmedium der Herstellungsmaschine und/oder Blasformmaschine enthaltene Wärme mittels der ersten Wärmerückgewinnungseinrichtung genutzt und einem zweiten Proessmedium der Behälterbehandlungsmaschine zugeführt werden. Somit kann der Energieverbrauch der Behälterbehandlungsanlage bei der Herstellung von Behältern reduziert und ein energieeffizienter Betrieb der Behälterbehandlungsanlage gewährleistet werden.

In einer Ausführungsform kann die Behälterbehandlungsanlage eine erste Zuführleitung umfassen, wobei der Herstellungsmaschine zur Kühlung ein Proessmedium der Blasformmaschine über die erste Zuführleitung zugeführt werden kann, wobei das Prozessmedium der Blasformmaschine das erste Prozessmedium ist. Durch Wiederverwendung des Prozessmediums der Blasformmaschine zur Kühlung der Herstellungsmaschine kann eine durch die Behälterbehandlungsanlage zur Kühlung der Herstellungsmaschine verbrauchte Energiemenge effektiv reduziert werden.

In einer Weiterbildung dieser Ausführungsform kann es vorgesehen sein, dass die Behälterbehandlungsanlage eine erste Rückführleitung umfasst, wobei ein Prozessmedium der Herstellungsmaschine über die erste Rückführleitung in die erste Zuführleitung rückgeführt werden kann, wenn eine Temperatur des Prozessmediums der Herstellungsmaschine über einem Temperaturgrenzwert liegt. Das Prozessmedium der Herstellungsmaschine kann somit wiederverwendet und der Herstellungsmaschine über die Rückführleitung zur Kühlung erneut zugeführt werden und somit der Energieverbrauch der Behälterbehandlungsanlage weiter reduziert werden.

In einer Weiterbildung der vorhergehenden Ausführungsform kann es vorgesehen sein, dass die Blasformmaschine eine Kühlvorrichtung umfasst, wobei die Kühlvorrichtung zwischen einem Zuführpunkt, an welchem das Prozessmedium der Herstellungsmaschine in die erste Zuführleitung über die erste Rückführleitung rückgeführt werden kann, und der Herstellungsmaschine angeordnet ist und zum Kühlen des Prozessmediums der Herstellungsmaschine und/oder der Blasformmaschine ausgebildet ist. Durch das Vorsehen der ersten Kühlvorrichtung kann das der Herstellungsmaschine von der Blasformmaschine über die erste Zuführleitung zugeführte und das von Herstellungsmaschine über die erste Rückführleitung rückgeführte Prozessmedium aktiv abgekühlt und somit eine hinreichende Kühlung der Herstellungsmaschine gewährleistet werden.

Es kann ferner vorgesehen sein, dass die Behälterbehandlungsanlage eine erste Abführleitung umfasst, wobei ein Prozessmedium der Herstellungsmaschine über die erste Abführleitung abgeführt werden kann, wenn eine Temperatur des Prozessmediums der Herstellungsmaschine kleiner oder gleich einem Temperaturgrenzwert ist, wobei das Prozessmedium der Herstellungsmaschine das zweite Prozessmedium ist. Somit kann das Prozessmedium der Herstellungsmaschine, sofern dessen Temperatur kleiner oder gleich dem Temperaturgrenzwert ist, der Wärmerückgewinnung als zweites Prozessmedium zugeführt und zum Wärmeaustausch mit dem ersten Prozessmedium verwendet werden.

In einer Weiterbildung der vorhergehenden Ausführungsform kann es vorgesehen sein, dass die Behälterbehandlungsanlage einen Verdichter zum Versorgen der Herstellungsmaschine und/oder der Blasformmaschine mit einem dritten Prozessmedium umfasst, wobei das durch die erste Abführleitung abgeführte Prozessmedium der Herstellungsmaschine dem Verdichter zugeführt werden kann. Bei dem Verdichter kann es sich beispielsweise um einen Kompressor handeln, welcher die Herstellungsmaschine und/oder die Blasformmaschine mit Druckluft versorgt. Da das von Herstellungsmaschine abgeführte Prozessmedium einen im Vergleich zu Frischluft niedrigeren Feuchtigkeitsanteil aufweist, ist eine Entfeuchtung des Prozessmediums im Verdichter nicht mehr notwendig. Somit kann der Energieverbrauch des Verdichters und der Energieverbrauch der gesamten Behälterbehandlungsanlage reduziert werden.

In einer Ausführungsform kann die Behälterbehandlungsanlage eine zweite Zuführleitung und eine erste Heizeinrichtung umfasst und die Herstellungsmaschine eine Speichervorrichtung für Material zur Herstellung von Vorformlingen umfassen, wobei das Material in der Speichervorrichtung erwärmt werden kann und der Speichervorrichtung zum Erwärmen des Materials ein Wärmeträgermedium über die zweite Zuführleitung zugeführt werden kann, wobei das Wärmeträgermedium vor Zufuhr mittels der ersten Heizvorrichtung erwärmt werden kann. Mittels der Speichervorrichtung kann das Herstellungsmaterial in der Herstellungsmaschine auf energieeffiziente Weise mit einer bestimmten Temperatur vorgehalten werden und die zur Herstellung der Vorformlinge benötigte Energiemenge im Vergleich zu einer kontinuierlichen Zufuhr von nicht vorerwärmten Herstellungsmaterial reduziert werden.

In einer Weiterbildung dieser Ausführungsform kann die Behälterbehandlungsanlage eine zweite Rückführleitung umfassen, wobei das Wärmeträgermedium von der Speichervorrichtung über die zweite Rückführleitung in die zweite Zuführleitung rückgeführt werden kann, wenn eine Temperatur des Wärmeträgermediums über einem Wärmeträgermediumtemperaturgrenzwert liegt. Auf diese Weise kann eine in dem Wärmeträgermedium enthaltene Restwärmemenge genutzt werden, um das Herstellungsmaterial in der Speichervorrichtung weiter zu erwärmen und die zur Erwärmung des Herstellungsmaterials benötigte Energiemenge somit reduziert werden.

Es kann zudem vorgesehen sein, dass die Behälterbehandlungsanlage eine zweite Abführleitung umfasst, wobei das Wärmeträgermedium aus der Speichervorrichtung mittels der zweiten Abführleitung abgeführt werden kann, wenn eine Temperatur des Wärmeträgermediums kleiner oder gleich einem Wärmeträgermediumtemperaturgrenzwert ist. Da in diesem Fall die in dem Wärmeträgermedium enthaltene Restwärmemenge nicht ausreichend sein kann, um eine Erwärmung des in Speichervorrichtung gespeicherten Herstellungsmaterials zu erreichen, kann durch Abführen des Wärmeträgermediums über die zweite Abführleitung eine enthaltene Restwärmemenge für andere Zwecke wiederverwendet werden.

In einer Ausführungsform kann die Behälterbehandlungsanlage eine zweite Wärmerückgewinnungseinrichtung umfassen, wobei der zweiten Wärmerückgewinnungseinrichtung das durch die zweite Abführleitung abgeführten Wärmeträgermedium und das durch die zweite Zuführleitung zugeführte Wärmeträgerträgermedium zugeführt werden kann, wobei in der zweiten Wärmerückgewinnungseinrichtung Wärme zwischen dem abgeführten und dem zugeführtem Wärmeträgermedium ausgetauscht werden kann. Durch das Vorsehen einer zweiten Wärmerückgewinnungseinrichtung kann auch eine in dem abgeführten Wärmeträgermedium enthaltene Restwärmemenge mit dem zugeführten Wärmeträgermedium ausgetauscht und der Energiebedarf der Behälterbehandlungsanlage somit weiter reduziert werden.

In einer Weiterbildung der beiden vorhergehenden Ausführungsformen kann die Behälterbehandlungsanlage eine Energiespeichervorrichtung umfasst, wobei der Energiespeichervorrichtung mittels dem durch die zweite Abführleitung abgeführten Wärmeträgermedium Energie zugeführt werden kann, wobei der ersten Heizvorrichtung Energie von der Energiespeichervorrichtung zugeführt werden kann. Somit kann eine in dem abgeführten Wärmeträgermedium enthaltene Restwärmemenge mittels der Energiespeichervorrichtung indirekt zum Erwärmen des der Speichervorrichtung zugeführten Wärmeträgermediums wiederverwendet werden und der Energiebedarf der Behälterbehandlungsanlage auf diese Weise weiter reduziert werden.

In einer Weiterbildung einer der drei vorhergehenden Ausführungsformen kann es vorgesehen sein, dass die Herstellungsmaschine eine Versorgungsvorrichtung für Material zur Herstellung von Vorformlingen umfasst, wobei die Speichervorrichtung über die Versorgungsvorrichtung mit Material versorgt werden kann, wobei das von der Speichervorrichtung durch die zweite Abführleitung abgeführte Wärmeträgermedium der Versorgungsvorrichtung zum Erwärmen des Materials zugeführt werden kann. Mittels der Versorgungsvorrichtung kann eine kontinuierliche Versorgung der Speichervorrichtung der Herstellungsmaschine mit Herstellungsmaterial sichergestellt werden. Durch das Vorwärmen des Herstellungsmaterials in der Versorgungsvorrichtung mittels des von der Speichervorrichtung abgeführten Wärmeträgermediums kann eine in dem Wärmeträgermedium enthaltene Restwärmemenge zum Vorwärmen des Herstellungsmaterials wiederverwendet werden und Herstellungsmaterial der Speichervorrichtung bereits im vorgewärmte Zustand zugeführt werden. Auf diese Weise kann der Energieverbrauch der Behälterbehandlungsmaschine weiter reduziert werden.

In einer Weiterbildung der vorhergehenden Ausführungsform kann es vorgesehen sein, dass die Behälterbehandlungsanlage eine zweite Heizvorrichtung umfasst, wobei die zweite Heizvorrichtung der Versorgungsvorrichtung zugeordnet ist und zum Erwärmen des der Versorgungsvorrichtung durch die zweite Abführleitung zugeführten Wärmeträgermediums ausgebildet ist, wobei der zweiten Heizvorrichtung Energie von der Energiespeichervorrichtung zugeführt werden kann. Somit kann eine Vorwärmung des Herstellungsmaterials mittels der zweiten Heizvorrichtung in der Versorgungsvorrichtung unter Verwendung von in der Behälterbehandlungsanlage rückgewonnener Energie flexibel geregelt und der Energieverbrauch der Behälterbehandlungsanlage weiter reduziert werden.

In einer Ausführungsform kann es vorgesehen sein, dass Wärme zwischen der ersten und der zweiten Wärmerückgewinnungseinrichtung ausgetauscht werden kann. Auf diese Weise kann auch ein Wärmeaustausch zwischen ersten/zweiten Prozessmedium und zugeführten/abgeführtem Wärmeträgermedium erreicht und in der Behälterbehandlungsanlage freiwerdende Wärmeenergie somit noch effizienter genutzt und der Energieverbrauch der Behälterbehandlungsanlage noch weiter reduziert werden.

Weiterhin ist erfindungsgemäß ein Verfahren zur Herstellung von Behältern vorgesehen, wobei die Behälter mit einer Behälterbehandlungsanlage entsprechend einer der vorhergehenden Ausführungsformen hergestellt werden und während des Betriebs zumindest teilweise mit wenigstens der ersten Wärmerückgewinnungseinrichtung Wärme zwischen dem ersten und dem zweiten Prozessmedium ausgetauscht wird.

Mittels des erfindungsgemäßen Verfahrens kann somit eine in einem Prozessmedium der Herstellungsmaschine und/oder Blasformmaschine enthaltene Wärme mittels der Wärmerückgewinnungseinrichtung genutzt und einem zweiten Proessmedium der Behälterbehandlungsmaschine zugeführt werden. Auf diese Weise kann ein Energieverbrauch der Behälterbehandlungsanlage bei der Herstellung von Behältern effektiv reduziert und ein energieeffizienter Betrieb gewährleistet werden.

### Kurze Beschreibung der Figuren

- Fig. 1:: Behälterbehandlungsanlage umfassend eine Herstellungsmaschine, eine Blasformmaschine und eine Wärmerückgewinnungseinrichtung gemäß einer Ausführungsform
- Fig. 2:: Behälterbehandlungsanlage umfassend eine Herstellungsmaschine, eine Blasformmaschine und eine Wärmrückgewinnungseinrichtung gemäß einer weiteren Ausführungsform

### Ausführliche Beschreibung der Figuren

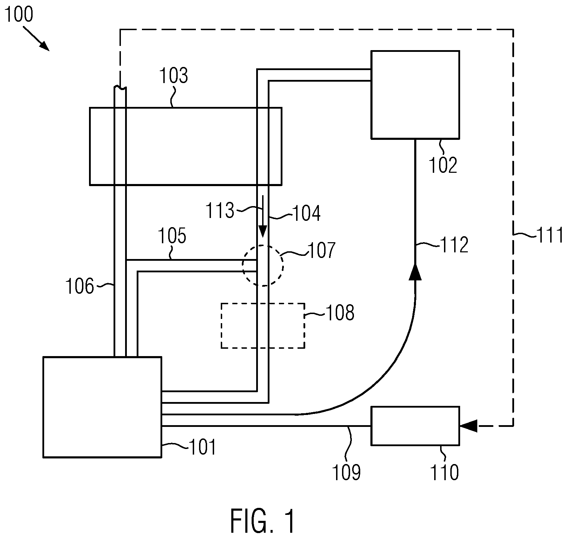

Fig. 1 zeigt eine Behälterbehandlungsanlage 100 umfassend eine Herstellungsmaschine zum Herstellen von Vorformlingen 101, eine Blasformmaschine 102 und eine Wärmerückgewinnungseinrichtung 103 gemäß einer Ausführungsform.

Erfindungsgemäß umfasst die Behälterbehandlungsanlage 100 die Herstellungsmaschine 101, die Blasformmaschine 102 und wenigstens eine Wärmerückgewinnungseinrichtung. In der im Zusammenhang mit der Fig. 1 gezeigten Ausführungsform umfasst die Behälterbehandlungsanlage 100 eine erste Wärmerückgewinnungseinrichtung 103.

Bei den mittels der Behälterbehandlungsanlage 100 hergestellten Behältern kann es sich um in der Getränkeindustrie zum Einsatz kommende Flaschen handeln. Es kann sich jedoch auch um jede andere Art von Behälter handeln, wie beispielsweise eine Dose oder eine Spritze, welcher zum Aufnehmen eines beliebigen pastösen und/oder flüssigen Mediums geeignet sein kann. Ferner können mit der Behälterbehandlungsanlage 100 auch Behälter hergestellt werden, wie sie in der Lebensmittelindustrie, der Medizinindustrie oder der Kosmetikindustrie zum Einsatz kommen.

Bei der Herstellungsmaschine 101 kann es sich um jede Vorrichtung handeln, welche zum Herstellen eines zu einem Behälter ausformbaren Vorformlings aus einem thermoplastischen Materials geeignet ist. Beispielsweise kann es sich bei der Herstellungsmaschine 101 um eine Spritzgussmaschine handeln. Alternativ kann es sich bei der Herstellungsmaschine 101 auch um eine Formpressmaschine handeln.

Bei der Blasformmaschine 102 kann es sich beispielsweise um eine Extrusionsblasformmaschine oder eine Streckblasformmaschine handeln. Die Blasformmaschine 102 kann beispielsweise als Rundläufermaschine ausgestaltet sein.

Die Herstellungsmaschine 101 und die Blasformmaschine 102 können geblockt sein, wobei unter geblockt verstanden werden kann, dass ein Betrieb der Herstellungsmaschine 101 auf einen Betrieb der Blasformmaschine 102 abgestimmt ist, so dass die von der Herstellungsmaschine 101 kommenden Vorformlinge direkt durch die Blasformmaschine 102 weiterverarbeitet werden können, ohne dass eine Zwischenspeicherung der von der Herstellungsmaschine 101 hergestellten Vorformlinge notwendig ist. Eine Zwischenspeicherung der Vorformlinge kann jedoch trotzdem vorgesehen sein.

Die Behälterbehandlungsanlage 100 kann eine Transportvorrichtung 112 umfassen, mittels welcher die von der Herstellungsmaschine 101 hergestellten Vorformlinge der Blasformmaschine102 zugeführt werden können.

Optional kann die Behälterbehandlungsanlage 100 weitere Behälterbehandlungsmaschinen umfassen. Diese können beispielsweise stromab der Blasformmaschine bezüglich einer Transportrichtung der Behälter angeordnet sein und ausgebildet sein, weitere Behälterbehandlungsschritte an den durch die Blasformmaschine 102 ausgeblasenen Behältern durchzuführen. Beispielsweise kann die Behälterbehandlungsanlage 100 optional auch einen Füller, einen Verschließer, einen Pasteur, eine Etikettiermaschine, eine Druckmaschine oder jede andere zur Behandlung von Behältern geeignete Maschine umfassen.

Bei der ersten Wärmerückgewinnungseinrichtung 103 kann es sich um jede Einrichtung handeln, welche geeignete ist Wärme zwischen wenigstens zwei Prozessmedien auszutauschen. Bei der ersten Wärmerückgewinnungseinrichtung 103 kann es sich beispielsweise um eine rekuperative Wärmerückgewinnungseinrichtung, eine regenerative Wärmerückgewinnungseinrichtung, eine Wärmepumpe oder jede andere zum Wärmeaustausch zwischen wenigstens zwei Prozessmedien geeignete Wärmerückgewinnungseinrichtung handeln. Unter einer rekuperativen Wärmerückgewinnungseinrichtung kann eine Wärmerückgewinnungseinrichtung verstanden werden, bei welcher Wärme direkt zwischen zwei Prozessmedien ausgetauscht werden kann. Unter einer regenerativen Wärmerückgewinnungseinrichtung kann wiederum eine Wärmerückgewinnungseinrichtung verstanden werden, welche ein zusätzliches Austauschmedium umfassen kann, mittels welchem Wärme indirekt zwischen den zwei Prozessmedien ausgetauscht werden kann.

Erfindungsgemäß kann der ersten Wärmerückgewinnungseinrichtung 103 ein erstes Prozessmedium von der Herstellungsmaschine 101 und/oder der Blasformmaschine 102 zugeführt werden. Ferner kann erfindungsgemäß mittels der ersten Wärmerückgewinnungseinrichtung 103 Wärme zwischen dem ersten Prozessmedium und einem zweiten Prozessmedium der Behälterbehandlungsanlage 100 ausgetauscht werden. Das zweite Prozessmedium kann ein Prozessmedium einer beliebigen Komponente der Behälterbehandlungsanlage 100 sein, welches zum Erwärmen oder Abkühlen in einem beliebigen Prozess der Behälterbehandlungsanlage 100 verwendet werden kann. Beispielsweise kann das zweite Prozessmedium ein Prozessmedium der Herstellungsmaschine 101 und/oder der Blasformmaschine 102 sein. Es kann sich jedoch auch um ein Prozessmedium einer beliebigen anderen Komponente der Behälterbehandlungsanlage 100, wie beispielsweise ein Prozessmedium eines optionalen Füllers oder eines optionalen Pasteurs oder jeder anderen optionalen Behälterbehandlungsmaschine der Behälterbehandlungsanlage 100 handeln. Somit kann eine beim Herstellungsprozess der Vorformlinge und/oder beim Blasformen der Vorformlinge zu Behältern freiwerdende Wärmemenge mittels der ersten Wärmerückgewinnungseinrichtung an ein zweites Prozessmedium der Behälterbehandlungsanlage 100 übertragen und somit beispielsweise für einen in der Behälterbehandlungsanlage 100 ablaufenden Prozess wiederverwendet werden. Somit kann der Energieverbrauch der Behälterbehandlungsanlage 100 effektiv reduziert werden.

Die Behälterbehandlungsanlage 100 kann eine erste Zuführleitung 104, welche die Blasformmaschine 102 mit der Herstellungsmaschine 101 verbinden kann, umfassen. Über die erste Zuführleitung kann der Herstellungsmaschine 101 ein Prozessmedium der Blasformmaschine 102 zur Kühlung der Herstellungsmaschine 101 zugeführt werden.

Beispielsweise kann es vorgesehen sein, dass das Prozessmedium der Blasformmaschine 102, welches der Herstellungsmaschine 101 über die erste Zuführleitung 104 zugeführt werden kann, eine beim Ausblasen eines Vorformlings zu einem Behälter verwendete Blasluft ist, welche nach dem Ausblasen eines Vorformlings aus der Blasformmaschine abgeführt wird. Es kann sich jedoch auch um jedes andere Prozessmedium der Blasformmaschine 102 handeln, beispielsweise ein Prozessmedium welches in der Blasformmaschine 102 zum Abkühlen der fertig ausgeblasenen Behälter oder zum Kühlen einer Komponente der Behälterbehandlungsmaschine 102 verwendet wurde.

Das der Herstellungsmaschine 101 über die erste Zuführleitung 104 zugeführte Prozessmedium der Blasformmaschine 102 kann zum Kühlen eines Prozessschrittes der Herstellungsmaschine 101 verwendet werden. Beispielsweise kann das über die erste Zuführleitung 104 der Herstellungsmaschine 101 zugeführte Prozessmedium zum Kühlen der mittels der Herstellungsmaschine 101 hergestellten Vorformlinge verwendet werden. Alternativ oder zusätzlich kann das der Herstellungsmaschine 101 über die erste Zuführleitung 104 zugeführte Prozessmedium auch zum Kühlen einer Komponente der Herstellungsmaschine 101 vorgesehen sein.

Die Behälterbehandlungsanlage 101 kann weiterhin eine erste Rückführleitung 105 umfassen, mittels welcher ein Prozessmedium der Herstellungsmaschine 101 in die erste Zuführleitung 104 rückgeführt werden kann und der Herstellungsmaschine 101 über die erste Zuführleitung 104 wieder zugeführt werden kann. Dies kann vorgesehen sein, wenn eine Temperatur des Prozessmediums der Herstellungsmaschine 101 über einem Temperaturgrenzwert liegt.

Bei dem Prozessmedium der Herstellungsmaschine 101, welches über die erste Rückführleitung 105 in die erste Zuführleitung 104 rückgeführt werden kann, kann es sich zumindest teilweise um das Prozessmedium der Blasformmaschine 102 handeln, welches der Herstellungsmaschine 101 über die erste Zuführleitung 104 zugeführt wurde. Wie oben beschrieben, kann das der Herstellungsmaschine 101 von der Blasformmaschine 102 zugeführte Prozessmedium beispielsweise in der Herstellungsmaschine 101 zum Kühlen eines Prozessschrittes verwendet werden und anschließend über die erste Rückführleitung wieder 105 aus der Herstellungsmaschine 101 herausgeführt und in die erste Zuführleitung 104 zurückgeführt werden.

Es kann vorgesehen sein, dass die erste Rückführleitung 105 mit der ersten Zuführleitung 104 an einem Zuführpunkt 107 verbunden ist. In einem Bereich der ersten Zuführleitung 104 zwischen dem Zuführpunkt 107 und der Herstellungsmaschine 101 kann eine Kühlvorrichtung 108, welche zum Kühlen des durch die erste Zuführleitung 104 geführten Prozessmediums der Herstellungsmaschine 101 und/oder der Blasformmaschine 102 ausgebildet ist, angeordnet sein.

Die Kühlvorrichtung 108 kann ein Kühlmedium, wie eine Kühlflüssigkeit umfassen, welches in der Kühlvorrichtung zirkuliert werden kann. Die erste Zuführleitung 104 kann beispielsweise durch die Kühlvorrichtung 108 geführt werden oder mit der Kühlvorrichtung 108 derart thermisch verbunden sein, dass ein Wärmeaustausch zwischen der Kühlvorrichtung 108, beziehungsweise dem durch die Kühlvorrichtung zirkulierten Kühlmedium, und des in der ersten Zuführleitung 104 in Richtung der Herstellungsmaschine 101 geführten Prozessmediums der Herstellungsmaschine 101 und/oder der Blasformmaschine 102 stattfinden kann. Auf diese Weise kann eine Abkühlung des in der ersten Zuführleitung 104 geförderten Prozessmediums der Herstellungsmaschine 101 und/oder der Blasformmaschine 102 erreicht werden, bevor dieses der Herstellungsmaschine 101 zugeführt wird und somit eine bessere Kühlung der Herstellungsmaschine 101 erreicht werden.

Die Kühlvorrichtung 108 kann beispielsweise als Wärmetauscher realisiert sein. Umfasst die Kühlvorrichtung 108 wie oben beschrieben ein Kühlmedium, so kann das Kühlmedium beispielsweise in einem auf dem Gegenstromprinzip beruhenden Wärmetauscher an dem durch die erste Zuführleitung 104 geförderten Prozessmedium der Herstellungsmaschine 101 und/oder der Blasformmaschine 102 vorbeigeführt und somit ein Wärmeaustausch zwischen den Prozessmedien beziehungsweise eine Abkühlung des in der ersten Zuführleitung geförderten Prozessmediums erreicht werden. Alternativ kann jedoch auch ein auf dem Gleichstromprinzip beruhender Wärmetauscher oder eine beliebige andere geeignete Art des Wärmeaustauschs vorgesehen sein.

Es kann vorgesehen sein, dass das Kühlmedium der Kühlvorrichtung eine Kühltemperatur von wenigstens 10 °C aufweist, bevor diese mit der ersten Zuführleitung 104 beziehungsweise mit dem darin geförderten Prozessmedium in thermischen Kontakt gebracht wird. Nachdem ein Wärmeaustausch zwischen Kühlmedium und dem in der ersten Zuführleitung 104 geförderten Prozessmedium stattgefunden hat, kann es vorgesehen sein, dass das Kühlmedium durch eine Kältemaschine geführt wird, in welcher die Temperatur des Kühlmediums wieder auf die Kühltemperatur reduziert wird. Die Kühlvorrichtung 108 kann mit der Kältemaschine beispielsweise auch über eine Wärmepumpe thermisch verbunden sein.

Die Behälterbehandlungsanlage 100 kann weiterhin eine erste Abführleitung 106 umfassen, mittels welcher ein Prozessmedium der Herstellungsmaschine 101 abgeführt werden kann. Ein Abführen des Prozessmediums der Herstellungsmaschine 101 über die erste Abführleitung 106 kann vorgesehen sein, wenn eine Temperatur des Prozessmediums der Herstellungsmaschine 101 kleiner oder gleich einem Temperaturgrenzwert ist. Der Temperaturgrenzwert kann beispielsweise basierend auf einer Temperatur des mittels der ersten Zuführleitung 104 aus der Blasformmaschine 102 abgeführten Prozessmediums an einer Position stromauf der Kühlvorrichtung 108 bezüglich einer Förderrichtung 112 gewählt sein. Beispielsweise kann der Temperaturgrenzwert so gewählt sein, dass er kleiner als eine Temperatur des mittels der ersten Zuführleitung 104 aus der Blasformmaschine 102 abgeführten Prozessmediums an der Position stromauf der Kühlvorrichtung 108 bezüglich der Förderrichtung 112 ist. Wird der ersten Wärmerückgewinnungseinrichtung 103 beispielsweise das durch die erste Abführleitung 106 abgeführte Prozessmedium der Herstellungsmaschine 101 als zweites Prozessmedium und das von der Blasformmaschine 102 über die erste Zuführleitung 104 abgeführte Prozessmedium der Blasformmaschine 102 als erstes Prozessmedium zugeführt, so kann bei entsprechender Wahl des Temperaturgrenzwertes mittels der ersten Wärmerückgewinnungseinrichtung eine Abkühlung des der Herstellungsmaschine 101 über die erste Zuführleitung 104 zugeführte Prozessmedium der Blasformmaschine 102 erreicht werden. Die eben beschriebene Wahl des Temperaturgrenzwertes ist als beispielhaft zu verstehen.

Die Behälterbehandlungsanlage 100 kann einen ersten Temperatursensor umfassen, mittels welchem eine Temperatur des Prozessmediums der Herstellungsmaschine 101 bestimmt werden kann bevor dieses mittels der ersten Abführleitung 106 oder der ersten Rückführleitung 105 aus der Herstellungsmaschine 101 abgeführt wird. Der erste Temperatursensor kann beispielsweise an einem Ausgang der Herstellungsmaschine 101 angeordnet sein, wobei der Ausgang der Herstellungsmaschine 101 wiederum mit der ersten Abführleitung 106 und der ersten Rückführleitung 105 in Verbindung stehen und ein steuerbares Ventil umfassen kann, mittels welchem das Prozessmedium der Herstellungsmaschine 101 entweder in die erste Abführleitung 106 oder die erste Rückführleitung 105 geführt werden kann. Das steuerbare Ventil kann allerdings auch derart angesteuert werden, dass das Prozessmedium der Herstellungsmaschine 101 sowohl in die erste Abführleitung 106 als auch in die erste Rückführleitung 105 geführt werden kann.

Der erste Temperatursensor und das steuerbare Ventil können mit einer Steuereinheit der Behälterbehandlungsanlage 100 in Verbindung stehen, wobei die Steuereinheit ausgebildet sein kann einen Vergleich der durch den ersten Temperatursensor bestimmten Temperatur und dem Temperaturgrenzwert durchzuführen und basierend auf dem Vergleich das steuerbare Ventil der Herstellungsmaschine 101 derart anzusteuern, dass das Prozessmedium der Herstellungsmaschine 101 entweder in die erste Rückführleitung 105 oder in die erste Abführleitung 106 geführt wird. Die Steuereinheit kann beispielsweise einen Prozessor und eine Speichervorrichtung umfassen, in welcher Referenzwerte, wie beispielsweise wenigstens ein Temperaturgrenzwert, hinterlegt sein können.

Die Steuereinheit kann zudem ausgebildet sein, weitere Komponenten der Behälterbehandlungsanlage 100, deren Betrieb mittels Betriebsparametern regelbar ist, zu steuern. Bei den Komponenten kann es sich beispielsweise um die Herstellungsmaschine 101 oder die Blasformmaschine 102 handeln. In der Speichervorrichtung der Steuervorrichtung können hierfür Betriebsparameter für die verschiedenen Komponenten der Behälterbehandlungsanlage 100 hinterlegt sein.

Bei dem Prozessmedium der Herstellungsmaschine 101, welches über die erste Abführleitung 106 abgeführt werden kann, kann es sich um das zweite Prozessmedium handeln, welches der ersten Wärmerückgewinnungseinrichtung 103 zugeführt werden kann. Die eben beschriebene Wahl des zweiten Prozessmediums ist als beispielhaft zu verstehen. Bei dem zweiten Prozessmedium kann es sich beispielsweise auch um ein Prozessmedium einer beliebigen anderen Komponente bzw. Behälterbehandlungsmaschine der Behälterbehandlungsanlage handeln, welches beispielsweise zum Erwärmen oder Kühlen eines beliebigen Prozesses der Behälterbehandlungsanlage verwendet wird.

Bei dem ersten Prozessmedium, welches der Wärmerückgewinnungseinrichtung 103 zugeführt werden kann, kann es sich um das Prozessmedium der Blasformmaschine 102 handeln, welches der Herstellungsmaschine 101 zum Kühlen über die erste Zuführleitung 104 zugeführt werden kann. Auch die Wahl des ersten Prozessmediums ist als beispielhaft zu verstehen. Das erste Prozessmedium kann beispielsweise auch ein Prozessmedium der Herstellungsmaschine 101 oder ein Prozessmedium der Herstellungsmaschine 101 und der Blasformmaschine 102 sein.

Durch Zuführen des Prozessmediums der Herstellungsmaschine 101 und des Prozessmediums der Blasformmaschine 102 in die Wärmerückgewinnungseinrichtung 103 kann ein Wärmeaustausch zwischen dem durch die erste Abführleitung 106 abgeführten Prozessmedium der Herstellungsmaschine 101 und dem durch die erste Zuführleitung 104 geführten Prozessmedium der Blasformmaschine 102 erreicht werden.

Die Wärmerückgewinnungseinrichtung 103 kann beispielsweise als Gegenstromwärmetauscher realisiert sein, in welchem das Prozessmedium der Herstellungsmaschine 101 und das Prozessmedium der Blasformmaschine 102 im Gegenstromprinzip aneinander vorbeigeführt werden, um einen möglichst guten Wärmeaustausch zwischen den beiden Prozessmedien zu erreichen.

Der Gegenstromwärmetauscher kann beispielsweise als Koaxialgegenstromwärmetauscher realisiert sein, bei welchem ein erstes Rohr innerhalb eines zweiten Rohres angeordnet ist und das in der ersten Zuführleitung 104 geführte Prozessmedium der Blasformmaschine 102 beispielsweise in dem ersten Rohr des Gegenstromwärmetauschers und das in der ersten Abführleitung 105 abgeführte Prozessmedium der Herstellungsmaschine 101 in das zweite Rohr, oder auch andersherum, geführt werden kann, um einen möglichst guten Wärmeaustausch zwischen den beiden Prozessmedien zu erreichen. Der Gegenstromwärmetauscher kann beispielsweise als Spirale ausgestaltet sein, wodurch dieser besonders platzsparend realisiert werden kann. Es kann jedoch beispielsweise auch ein Plattenwärmetauscher oder jede andere geeignete Art von Wärmetauscher vorgesehen sein.

Ferner muss die Wärmerückgewinnungseinrichtung 103 nicht zwingend als Gegenstromwärmetauscher ausgestaltet sei. Auch ein Gleichstromwärmetauscher oder jede andere zur Energierückgewinnung geeignete Vorrichtung, wie beispielsweise eine Wärmepumpe, ist denkbar. Ferner kann der Wärmetauscher auch ein Austauschmedium umfassen, mittels welchem Wärme indirekt zwischen den beiden Prozessmedien übertragen werden kann.

Nachdem das Prozessmedium der Herstellungsmaschine 101 und das Prozessmedium der Blasformmaschine 102 durch die Wärmerückgewinnungseinrichtung 103 geführt und Wärme zwischen den beiden Prozessmedien ausgetauscht wurde, kann das Prozessmedium der Herstellungsmaschine 101 über die erste Abführleitung 106 und das Prozessmedium der Blasformmaschine 102 über die erste Zuführleitung 104 wieder aus der Wärmerückgewinnungseinrichtung 103 herausgeführt werden.

Wie in der Fig. 1 gezeigt, kann die erste Zuführleitung 104 stromauf des Zuführpunktes 107 bezüglich der Transportrichtung 113 des Prozessmediums der Herstellungsmaschine 101 in die Wärmerückgewinnungseinrichtung 103 geführt werden oder mit dieser in thermischen Kontakt gebracht werden. Folglich kann ein Wärmeaustausch zwischen dem in der ersten Zuführleitung 104 geführten Prozessmedium der Blasformmaschine 102 und dem in der ersten Abführleitung 106 geführten Prozessmedium der Herstellungsmaschine 101 stattfinden, bevor das in der ersten Zuführleitung 104 geführte Prozessmedium der Blasformmaschine 102 mittels der Kühlvorrichtung 108 weiter abgekühlt wird.

In einer Ausführungsform kann es vorgesehen sein, dass eine Temperatur des Prozessmediums der Blasformmaschine 102 bevor dieses durch die erste Wärmerückgewinnungseinrichtung 103 geführt wird größer als eine Temperatur des durch die erste Abführleitung 106 abgeführten Prozessmediums der Herstellungsmaschine 101 ist. In diesem Fall kann durch die erste Wärmerückgewinnungseinrichtung 103 Wärme von dem durch die erste Zuführleitung 104 geführten Prozessmedium der Blasformmaschine 102 an das durch die erste Abführleitung 106 abgeführte Prozessmedium der Herstellungsmaschine 101 übertragen und die Temperatur des Prozessmediums der Blasformmaschine 102 nach Durchlaufen der Wärmerückgewinnungseinrichtung 103 reduziert werden.

Es kann außerdem vorgesehen sein, dass die Behälterbehandlungsanlage 100 einen Verdichter 110 umfasst, mittels welchem der Herstellungsmaschine 101 und/oder der Blasformmaschine ein drittes Prozessmedium zugeführt werden kann. Beispielsweise kann es vorgesehen sein, dass mittels des dritten Prozessmediums ein Funktionsteil der Herstellungsmaschine, wie beispielsweise eines Schließmechanismus, und/oder der Blasformmaschine gesteuert werden kann. Bei dem dritten Prozessmedium kann es sich beispielsweise um Druckluft oder ein unter Druck stehendes Gas handeln.

Es kann vorgesehen sein, dass das durch die erste Abführleitung 106 abgeführte Prozessmedium der Herstellungsmaschine 101, nachdem dieses durch die Wärmerückgewinnungseinrichtung 103 geführt wurde, dem Verdichter 110 als Ansaugluft über eine Leitung 111 zugeführt wird. Alternativ kann es jedoch auch vorgesehen sein, dass dem Verdichter Frischluft als Ansaugluft zugeführt wird. Der Verdichter 110 kann wiederum über eine Leitung 109 mit der Herstellungsmaschine verbunden sein, mittels welcher der Herstellungsmaschine 101 das verdichtete dritte Prozessmedium zugeführt werden kann. Alternativ oder zusätzlich kann der Verdichter 110 auch mit der Blasformmaschine über eine hier nicht gezeigte Leitung verbunden werden, mittels welcher der Blasformmaschine das verdichtete dritte Prozessmedium zugeführt werden kann.

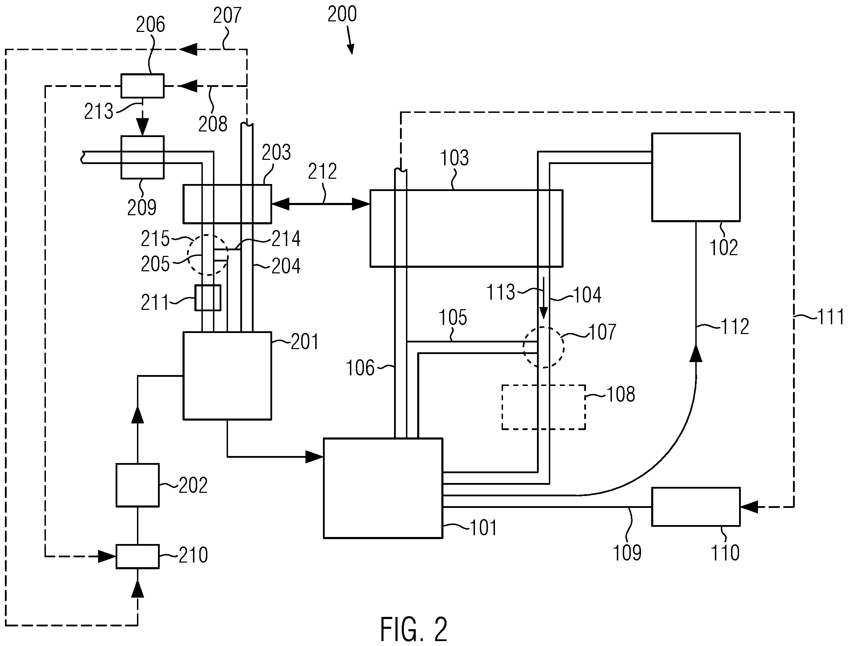

Fig. 2 zeigt eine Behälterbehandlungsanlage 200 gemäß einer weiteren Ausführungsform.

Die Behälterbehandlungsanlage 200 kann alle Komponenten der im Zusammenhang mit der Figurenbeschreibung der Fig. 1 beschriebenen Behälterbehandlungsanlage 100 umfassen. Diese Komponenten sind in der Fig. 2 mit den gleichen Bezugszeichen wie in der Fig. 1 gekennzeichnet. Für Details bezüglich der mit den Bezugszeichen 101 - 113 gekennzeichneten Komponenten der Behälterbehandlungsanlage 200 wird auf die Figurenbeschreibung der Fig. 1 verwiesen.

Bei der in der Fig. 2 gezeigten Ausführungsform kann die Herstellungsmaschine 101 eine Speichervorrichtung 201 für Material zur Herstellung von Vorformlingen umfassen. In der Speichervorrichtung 201 kann eine Erwärmung des Materials zur Herstellung der Vorformling erfolgen. Hierfür kann die Behälterbehandlungsanlage 200 eine zweite Zuführleitung 205 umfassen, über welche der Speichervorrichtung 201 ein Wärmeträgermedium zum Erwärmen des Materials zur Herstellung der Vorformlinge zugeführt werden kann. Bei dem Wärmeträgermedium kann es sich beispielsweise um Frischluft oder auch jedes andere Gas beziehungsweise Gasgemisch handeln.

Die Behälterbehandlungsanlage 200 kann weiterhin eine erste Heizvorrichtung 209 umfassen, welche der zweiten Zuführleitung 205 zugeordnet sein kann und mittels welcher das Wärmeträgermedium in der zweiten Zuführleitung 205 erwärmt werden kann, bevor dieses der Speichervorrichtung 201 zum Erwärmen des Materials zum Herstellen der Vorformlinge zugeführt wird.

Ferner kann die Behälterbehandlungsanlage 200 eine zweite Rückführleitung 214 umfassen, über welche das der Speichervorrichtung 201 zum Erwärmen des Materials zur Herstellung der Vorformlinge zugeführte Wärmeträgermedium wieder aus der Speichervorrichtung 201 in die zweite Zuführleitung 205 rückgeführt werden kann. Die Rückführung des Wärmeträgermediums über die zweite Rückführleitung 214 kann vorgesehen sein, wenn eine Temperatur des Wärmeträgermediums über einem Wärmeträgermediumtemperaturgrenzwert liegt. Der Wärmeträgermediumtemperaturgrenzwert kann beispielsweise so gewählt sein, dass er über einer Temperatur des in der Speichervorrichtung 201 gespeicherten Materials zur Herstellung der Vorformlinge liegt. Auf diese Weise kann durch die Rückführung des Wärmeträgermediums über die zweite Rückführleitung 214 in die Speichervorrichtung 201 eine in dem Wärmeträgermedium enthaltene Restwärmemenge zum weiteren Erwärmen des Materials zum Herstellen der Vorformlinge genutzt werden.

Die zweite Rückführleitung 214 kann mit der zweiten Zuführleitung 205 an einem Rückführpunkt 215 verbunden sein. Der Rückführpunkt kann stromab der ersten Heizvorrichtung 209 bezüglich einer Transportrichtung des Wärmeträgermediums in der zweiten Zuführleitung 205 angeordnet sein.

Die Behälterbehandlungsanlage 200 kann weiterhin eine elektrische Heizvorrichtung 211 umfassen, welche einem Bereich der zweiten Zuführleitung 205 zwischen dem Rückführpunkt 215 und der Speichervorrichtung 201 zugeordnet sein kann. Die elektrische Heizvorrichtung 211 kann beispielsweise zur Feinabstimmung einer Temperatur des der Speichervorrichtung 201 zugeführten Wärmeträgermediums vorgesehen sein. Beispielsweise kann es vorgesehen sein, dass die Behälterbehandlungsanlage 200 einen zweiten Temperatursensor umfasst, welcher in der zweiten Zuführleitung 205 in einem Bereich zwischen dem Rückführpunkt 215 und der elektrischen Heizvorrichtung 211 angeordnet sein kann und zur Bestimmung einer Temperatur des Wärmeträgermediums bevor dieses durch die elektrische Heizvorrichtung 211 geführt wird, vorgesehen sein kann. Der zweite Temperatursensor kann mit der im Zusammenhang mit der Fig. 1 beschriebenen Steuereinheit verbunden sein und die Steuereinheit kann ausgebildet sein, eine Heizleistung der elektrischen Heizvorrichtung 211 basierend auf der durch den zweiten Temperatursensor bestimmten Temperatur zu regeln. Auf diese Weise kann sichergestellt werden, dass das Wärmeträgermedium der Speichervorrichtung 201 mit einer bestimmten Zieltemperatur zugeführt werden kann.

Weiterhin kann die Behälterbehandlungsanlage 200 eine zweite Abführleitung 204 umfassen, über welche das der Speichervorrichtung 201 zum Erwärmen des Materials zur Herstellung der Vorformlinge zugeführte Wärmeträgermedium wieder aus der Speichervorrichtung 201 abgeführt werden kann. Das Abführen des Wärmeträgermediums über die zweite Abführleitung 204 kann vorgesehen sein, wenn eine Temperatur des Wärmeträgermediums kleiner oder gleich einem Wärmeträgermediumtemperaturgrenzwert ist.

Zur Bestimmung der Temperatur des Wärmeträgermediums kann die Behälterbehandlungsanlage 200 einen dritten Temperatursensor umfassen, mittels welchem eine Temperatur des Wärmeträgermediums bestimmt werden kann, nachdem dieses der Speichervorrichtung 201 zum Erwärmen des Materials zum Herstellen der Vorformlinge zugeführt wurde und bevor dieses mittels der zweiten Abführleitung 204 oder der zweiten Rückführleitung 214 aus der Speichervorrichtung 201 abgeführt wird. Der dritte Temperatursensor kann hierfür beispielsweise an einem Ausgang der Speichervorrichtung 201 angeordnet sein, über welchen das Wärmeträgermedium entweder der zweiten Rückführleitung 214 oder der zweiten Abführleitung 204 zugeführt werden kann. Der Ausgang kann beispielsweise ein steuerbares Ventil umfassen, welche derart angesteuert werden kann, dass das von der Speichervorrichtung 201 abzuführende Wärmeträgermedium entweder der ersten Rückführleitung 214 oder der ersten Abführleitung 204 zugeführt wird. Das steuerbare Ventil kann jedoch auch derart angesteuert werden, dass das abzuführende Wärmeträgermedium der ersten Rückführleitung 214 und der ersten Abführleitung 204 zugeführt wird.

Auch der dritte Temperatursensor kann mit der im Zusammenhang mit der Fig. 1 beschriebenen Steuereinheit in Verbindung stehen. Die Steuereinheit kann dabei ausgebildet sein, basierend auf einem Vergleich der durch den dritten Temperatursensor bestimmten Temperatur und dem Wärmeträgermediumtemperaturgrenzwert das an dem Ausgang der Speichervorrichtung 201 angeordnete steuerbare Ventil anzusteuern.

Die Behälterbehandlungsanlage 200 kann eine zweite Wärmerückgewinnungseinrichtung 203 umfassen. Der zweiten Wärmerückgewinnungseinrichtung 203 kann das durch die zweite Abführleitung 204 abgeführte Wärmeträgermedium und das durch die zweite Zuführleitung 205 zugeführte Wärmeträgerträgermedium zugeführt werden und ausgebildet sein, Wärme zwischen den beiden Wärmeträgermedien auszutauschen.

Beispielsweise kann es vorgesehen sein, dass eine Temperatur des der zweiten Wärmerückgewinnungseinrichtung 203 über die zweite Zuführleitung 205 zugeführten Wäremträgermediums niedriger als eine Temperatur des der zweiten Wärmerückgewinnungseinrichtung 203 über die zweite Abführleitung 204 aus der Speichervorrichtung 201 zugeführten Wärmeträgermediums ist. In diesem Fall kann in der Wärmerückgewinnungseinrichtung 203 Wärme von dem abgeführten Wärmeträgermedium auf das über die zweite Zuführleitung 205 zugeführte Wärmeträgermedium übertragen werden. Somit kann die Temperatur des der Speichervorrichtung 201 über die zweite Zuführleitung 205 zugeführten Wärmeträgermediums nach Durchlaufen der Wärmerückgewinnung 203 weiter erhöht und die Temperatur des durch die zweite Abführleitung 204 abgeführten Wärmeträgermediums nach Durchlaufen der Wärmerückgewinnung 203 reduziert werden.

Die zweite Wärmerückgewinnungseinrichtung 203 kann entsprechend der im Zusammenhang mit der Fig. 1 beschriebenen ersten Wärmerückgewinnungseinrichtung 103 ausgestaltet sein. Beispielsweise kann die zweite Wärmerückgewinnungseinrichtung 203 als Gegenstromwärmetauscher, als Gleichstromwärmetauscher, als Wärmepumpe oder als jede andere zum Wärmeaustausch zwischen den beiden durch die zweite Wärmerückgewinnungseinrichtung 203 geführten Wärmeträgermedien geeignete Vorrichtung ausgestaltet sein.

Die Behälterbehandlungsanlage 200 kann ferner eine Energiespeichervorrichtung 206 umfassen, wobei der Energiespeichervorrichtung 206 mittels dem durch die zweite Abführleitung 204 abgeführten Wärmeträgermedium Energie zugeführt werden kann 208. Beispielsweise kann es vorgesehen sein, dass der Energiespeichervorrichtung 206 Energie von dem abgeführten Wärmeträgermedium zugeführt wird, nachdem dieses durch die zweite Wärmerückgewinnungseinrichtung 203 geführt wurde. In diesem Fall kann die Energiespeichervorrichtung 206 bezüglich einer Transportrichtung des Wärmeträgermediums in der zweiten Abführleitung 204 stromab der zweiten Wärmerückgewinnungseinrichtung 203 angeordnet sein.

Die Energiespeichervorrichtung 206 kann beispielsweise als Wärmespeichervorrichtung ausgebildet sein. Die Wärmespeichervorrichtung kann beispielsweise ein Wärmespeichermedium umfassen. Die zweite Abführleitung 204 kann beispielsweise zumindest teilweise durch die Wärmespeichervorrichtung geführt werden oder zumindest teilweise im thermischen Kontakt mit der Wärmespeichervorrichtung stehen, so dass ein Wärmeaustausch zwischen dem in der zweiten Abführleitung 204 abgeführten Wärmeträgermedium und dem Wärmespeichermedium stattfinden kann und Wärme von dem in der zweiten Abführleitung 204 abgeführten Wärmeträgermedium an das Wärmespeichermedium der Wärmespeichervorrichtung übertragen werden kann.

Alternativ kann die Energiespeichervorrichtung beispielsweise auch als elektrische Speichervorrichtung ausgestaltet sein und einen thermoelektrischen Generator umfassen, mittels welchem die in dem abgeführten Wärmeträgermedium gespeicherte Wärmeenergie zumindest teilweise in elektrische Energie umgewandelt werden und in der elektrischen Speichervorrichtung als elektrische Energie gespeichert werden kann.

Die erste Heizvorrichtung 209 kann mit der Energiespeichervorrichtung 206 in elektrischer oder thermischer Verbindung 213 stehen, so dass der ersten Heizvorrichtung 209 elektrische oder Wärmeenergie von der Energiespeichervorrichtung 206 zugeführt und das durch die zweite Zuführleitung 205 geführte Wärmeträgermedium durch die erste Heizvorrichtung 209 erwärmt werden kann.

Die Herstellungsmaschine 101 kann eine Versorgungsvorrichtung 202 für Material zur Herstellung von Vorformlingen umfassen. Die Speichervorrichtung 201 kann über die Versorgungsvorrichtung 202 mit Material versorgt werden. Somit kann eine kontinuierliche Versorgung der Speichervorrichtung 201 mit Material zur Herstellung von Vorformlingen gewährleistet werden. Ferner kann es vorgesehen sein, das von der Speichervorrichtung 201 durch die zweite Abführleitung 204 abgeführte Wärmeträgermedium der Versorgungsvorrichtung 202 wieder zuzuführen. Hierfür kann beispielsweise eine thermische Verbindung 207 zwischen der zweiten Abführleitung 204 und der Versorgungsvorrichtung 202 bestehen. Die Versorgungseinrichtung 202 kann beispielsweise eine Wirbelstromheizung umfassen, über welche das durch die zweite Abführleitung 204 abgeführte Wärmeträgermedium der Versorgungsvorrichtung zum Erwärmen des Materials zum Herstellen der Vorformlinge zugeführt werden kann.

Weiterhin kann es vorgesehen sein das durch die zweite Abführleitung 204 abgeführte Wärmeträgermedium weiter zu erwärmen, bevor es der Versorgungsvorrichtung 202 zugeführt wird. Hierfür kann die Behälterbehandlungsanlage 200 eine zweite Heizvorrichtung 201 umfassen, wobei die zweite Heizvorrichtung 201 der Versorgungsvorrichtung 202 zugeordnet sein kann und zum Erwärmen des der Versorgungsvorrichtung 202 über die zweite Abführleitung 204 zugeführten Wärmeträgermediums ausgebildet sein kann. Es kann beispielsweise vorgesehen sein, dass die zweite Heizvorrichtung 210 in thermischer oder elektrischer Verbindung mit der Energiespeichervorrichtung 206 steht und der zweiten Heizvorrichtung 210 thermische oder Wärmeenergie von der Energiespeichervorrichtung zugeführt werden kann. Auf diese Weise kann der Energiebedarf der Behälterbehandlungsanlage 200 weiter reduziert werden.

Es kann ferner vorgesehen sein, dass die erste 103 und die zweite Wärmerückgewinnungseinrichtung 203 über eine Wärmebrücke 212 miteinander in Verbindung stehen und Wärme zwischen der ersten 103 und der zweiten Wärmerückgewinnungseinrichtung 203 ausgetauscht werden kann. Auf diese Weise kann auch ein Wärmeaustausch zwischen ersten/zweiten Prozessmedium und zugeführten/abgeführtem Wärmeträgermedium erreicht und in der Behälterbehandlungsanlage 200 freiwerdende Wärmeenergie somit noch effizienter genutzt und der Energieverbrauch der Behälterbehandlungsanlage 200 noch weiter reduziert werden.

## Patentansprüche

1. Behälterbehandlungsanlage (100) umfassend eine Herstellungsmaschine für Vorformlinge (101), eine Blasformmaschine (102) und wenigstens eine Wärmerückgewinnungseinrichtung (103), wobei einer ersten Wärmerückgewinnungseinrichtung ein erstes Prozessmedium von der Herstellungsmaschine und/oder der Blasformmaschine zugeführt werden kann, wobei mittels der ersten Wärmerückgewinnungseinrichtung Wärme zwischen dem ersten Prozessmedium und einem zweiten Prozessmedium der Behälterbehandlungsanlage ausgetauscht werden kann.

2. Behälterbehandlungsanlage nach Anspruch 1, wobei die Behälterbehandlungsanlage eine erste Zuführleitung (104) umfasst, wobei der Herstellungsmaschine zur Kühlung ein Prozessmedium der Blasformmaschine über die erste Zuführleitung zugeführt werden kann, wobei das Prozessmedium der Blasformmaschine das erste Prozessmedium ist.

3. Behälterbehandlungsanlage nach Anspruch 2, wobei die Behälterbehandlungsanlage eine erste Rückführleitung (105) umfasst, wobei ein Prozessmedium der Herstellungsmaschine über die erste Rückführleitung in die erste Zuführleitung (104) rückgeführt werden kann, wenn eine Temperatur des Prozessmediums der Herstellungsmaschine über einem Temperaturgrenzwert liegt.

4. Behälterbehandlungsanlage nach Anspruch 3, umfassend eine Kühlvorrichtung (108), wobei die Kühlvorrichtung zwischen einem Zuführpunkt (107), an welchem das Prozessmedium der Herstellungsmaschine in die erste Zuführleitung (104) über die erste Rückführleitung (105) rückgeführt werden kann, und der Herstellungsmaschine angeordnet ist und zum Kühlen des Prozessmediums der Herstellungsmaschine und/oder der Blasformmaschine ausgebildet ist.

5. Behälterbehandlungsanlage nach einem der Ansprüche 1 bis 4, wobei die Behälterbehandlungsanlage eine erste Abführleitung (106) umfasst, wobei ein Prozessmedium der Herstellungsmaschine über die erste Abführleitung abgeführt werden kann, wenn eine Temperatur des Prozessmediums der Herstellungsmaschine kleiner oder gleich einem Temperaturgrenzwert ist, wobei das Prozessmedium der Herstellungsmaschine das zweite Prozessmedium ist.

6. Behälterbehandlungsanlage nach Anspruch 5, umfassend einen Verdichter (110) zum Versorgen der Herstellungsmaschine und/oder der Blasformmaschine mit einem dritten Prozessmedium, wobei das durch die erste Abführleitung abgeführte Prozessmedium der Herstellungsmaschine dem Verdichter zugeführt werden kann.

7. Behälterbehandlungsanlage nach einem der Ansprüche 1 bis 6, wobei die Behälterbehandlungsanlage eine zweite Zuführleitung (205) und eine erste Heizeinrichtung (209) umfasst, wobei die Herstellungsmaschine eine Speichervorrichtung (201) für Material zur Herstellung von Vorformlingen umfasst, wobei das Material in der Speichervorrichtung erwärmt werden kann, wobei der Speichervorrichtung zum Erwärmen des Materials ein Wärmeträgermedium über die zweite Zuführleitung zugeführt werden kann, wobei das Wärmeträgermedium vor Zufuhr mittels der ersten Heizvorrichtung erwärmt werden kann.

8. Behälterbehandlungsanlage nach Anspruch 7, wobei die Behälterbehandlungsanlage eine zweite Rückführleitung (214) umfasst, wobei das Wärmeträgermedium von der Speichervorrichtung über die zweite Rückführleitung in die zweite Zuführleitung rückgeführt werden kann, wenn eine Temperatur des Wärmeträgermediums über einem Wärmeträgermediumtemperaturgrenzwert liegt.

9. Behälterbehandlungsanlage nach einem der Ansprüche 7 oder 8, wobei die Behälterbehandlungsanlage eine zweite Abführleitung (204) umfasst, wobei das Wärmeträgermedium aus der Speichervorrichtung mittels der zweiten Abführleitung abgeführt werden kann, wenn eine Temperatur des Wärmeträgermediums kleiner oder gleich einem Wärmeträgermediumtemperaturgrenzwert ist.

10. Behälterbehandlungsanlage nach Anspruch 9, wobei die Behälterbehandlungsanlage eine zweite Wärmerückgewinnungseinrichtung (203) umfasst, wobei der zweiten Wärmerückgewinnungseinrichtung das durch die zweite Abführleitung abgeführten Wärmeträgermedium und das durch die zweite Zuführleitung zugeführte Wärmeträgerträgermedium zugeführt werden kann, wobei in der zweiten Wärmerückgewinnungseinrichtung Wärme zwischen dem abgeführten und dem zugeführtem Wärmeträgermedium ausgetauscht werden kann.

11. Behälterbehandlungsanlage nach Anspruch 9 oder 10, wobei die Behälterbehandlungsanlage eine Energiespeichervorrichtung (206) umfasst, wobei der Energiespeichervorrichtung mittels dem durch die zweite Abführleitung abgeführten Wärmeträgermedium Energie zugeführt werden kann, wobei der ersten Heizvorrichtung Energie von der Energiespeichervorrichtung zugeführt werden kann.

12. Behälterbehandlungsanlage nach einem der Ansprüche 9 bis 11, wobei die Herstellungsmaschine eine Versorgungsvorrichtung (202) für Material zur Herstellung von Vorformlingen umfasst, wobei die Speichervorrichtung über die Versorgungsvorrichtung mit Material versorgt werden kann, wobei das von der Speichervorrichtung durch die zweite Abführleitung abgeführte Wärmeträgermedium der Versorgungsvorrichtung zum Erwärmen des Materials zugeführt werden kann.

13. Behälterbehandlungsanlage nach Anspruch 12, wobei die Behälterbehandlungsanlage eine zweite Heizvorrichtung (210) umfasst, wobei die zweite Heizvorrichtung der Versorgungsvorrichtung zugeordnet ist und zum Erwärmen des der Versorgungsvorrichtung durch die zweite Abführleitung zugeführten Wärmeträgermediums ausgebildet ist, wobei der zweiten Heizvorrichtung Energie von der Energiespeichervorrichtung zugeführt werden kann.

14. Behälterbehandlungsanlage nach einem der Ansprüche 10 bis 13, wobei Wärme zwischen der ersten und der zweiten Wärmerückgewinnungseinrichtung ausgetauscht werden kann.

15. Verfahren zur Herstellung von Behältern, wobei die Behälter mit einer Behälterbehandlungsanlage entsprechend einem der Ansprüche 1 bis 14 hergestellt werden und während des Betriebs zumindest teilweise mit wenigstens der ersten Wärmerückgewinnungseinrichtung Wärme zwischen dem ersten und dem zweiten Prozessmedium ausgetauscht wird.
